# EUROPÄISCHE PATENTSCHRIFT

(11) **EP 2 759 560 B1**
(45) Veröffentlichungstag und Bekanntmachung des Hinweises auf die Patenterteilung: **18.07.2018**
(21) Anmeldenummer: 14000048.0
(22) Anmeldetag: 08.01.2014
(51) Int. Cl.: C08G 63/685, C08G 63/52, C08J 3/00, C08G 81/02, C08L 13/00, C08L 15/00

(54) **Polymergebundene Antistatikadditive und damit antistatisch ausgerüstete Elastomere und Elastomerbauteile**
Polymer-bound anti static additives and antistatically equipped elastomers and elastomer components
Additifs antistatiques polymériques et élastomères et composants élastomère équipés ainsi de manière antistatique

(30) Priorität: 23.01.2013 DE 102013001135
(43) Veröffentlichungstag der Anmeldung: 30.07.2014
(73) Patentinhaber: GIFAS Beteiligungen GmbH, 41469 Neuss/Rhein (DE)
(72) Erfinder: Szabang, Katrin, 01217 Dresden (DE); Gedan-Smolka, Michaela, 01990 Grossmehlen (DE); Jurk, René, 01987 Schwarzheide (DE)
(74) Vertreter: Grape & Schwarzensteiner

(56) Entgegenhaltungen:
- EP-A1- 1 500 684
- US-A- 4 661 547
- US-A- 6 130 277
- US-A1- 2004 220 301
- US-A1- 2006 100 300
- US-A1- 2008 306 200
- LINDSELL W E ET AL: "The preparation and characterization of phosphorus-terminated poly-1,3-butadiene: new telechelic ionomers", POLYMER, ELSEVIER SCIENCE PUBLISHERS B.V, GB, Bd. 31, Nr. 7, 1. Juli 1990 (1990-07-01), Seiten 1374-1378, XP024118286, ISSN: 0032-3861, DOI: 10.1016/0032-3861(90)90233-O [gefunden am 1990-07-01]
- VENKATESHWARAN L N; TANT M R; WILKES G L; CHARLIER P; JEROME R: "Structure-property comparison of sulfonated and carboxylated telechelic ionomers based on polyisoprene", MACROMOLECULES, Bd. 25, Nr. 15, 20. Juli 1992 (1992-07-20) , Seiten 3996-4001, XP002740345,
- SCHAEDLER VOLKER; FRANCK ACHIM; WIESNER ULRICH; SPIESS HANS W: "EPR studies on telechelic polymers: characterization of ion multiplets", MACROMOLECULES, Bd. 30, Nr. 13, 30. Juni 1997 (1997-06-30) , Seiten 3832-3838, XP002740346,
- BHARGAVA S., COOPER S.L.: "Effect on Water on Viscosity and Shear-Thickening Behavior of Telechelic Ionomers in Non polar Solvents", MACROMOLECULES, Bd. 31, 1. Januar 1998 (1998-01-01), Seiten 508-514, XP002740347,
- CHARLIEN PASCAL; JEROME ROBERT; TEYSSIE PHILIPPE; UTRACKI L A: "Viscoelastic properties of telechelic ionomers. 2. Quaternized [alpha],[omega]-bis(dimethylamino)polyisop rene", MACROMOLECULES, Bd. 25, Nr. 2, 20. Januar 1992 (1992-01-20), Seiten 617-624, XP002740348,
- DATABASE WPI Week 200717 Thomson Scientific, London, GB; AN 2007-165729 XP002740349, & JP 2007 009042 A (SANKO KAGAKU KOGYO KK) 18. Januar 2007 (2007-01-18)

## Beschreibung

Die Erfindung betrifft polymergebundene Additive zur permanent antistatischen Ausrüstung von Elastomeren, die damit permanent antistatisch ausgerüsteten Elastomere, Verfahren zur Herstellung der permanent antistatisch ausgerüsteten Elastomere sowie von Bauteilen daraus für elektrotechnische und elektronische Anwendungen sowohl im Niederspannungsbereich als auch im Hochleistungs- bzw. Hochspannungsbereich. Ein besonders wichtiger Anwendungsbereich ist der Explosionsschutz.

Es ist üblich vulkanisierte Elastomere als Bauteile für elektrotechnische und elektronische Anwendungen einzusetzen. Polymere allgemein, so auch Elastomere, sind an sich elektrisch isolierend und besitzen einen spezifischen Oberflächenwiderstand von >> 10¹³ Ω/□. Zum Schutz von Personen und Anlagen vor elektrostatischer Aufladung, vor Entladungsvorgängen oder Funkenentladungen sind daher für den genannten Anwendungsbereich antistatisch ausgerüstete Elastomerbauteile gewünscht, deren spezifischer Oberflächenwiderstand bei normalen Klimabedingungen (23° C, 50% relative Luftfeuchte) unter 10¹⁰ Ω/□ liegt, so dass die Bauteile statische Ladungen ableiten können. Der Abfluss elektrischer Ladung von den Bauteilen kann gleichzeitig eine Verminderung der Staubbelastung bewirken, die wiederum die Wahrscheinlichkeit von Kurzschlüssen zumindest verringert und den Reinigungsaufwand über die Lebensdauer der Anlagen reduziert. Die Vermeidung oder Unterdrückung der elektrostatischen Aufladung von Betriebsanlagen der verarbeitenden Industrie, z.B. der chemischen Industrie, in Großbäckereien, Mühlen etc. bietet einen guten Explosionsschutz oder trägt zumindest zum Explosionsschutz bei.

Antistatisch ausgerüstete Kunststoffe und Elastomere sind im Stand der Technik bekannt. Eine antistatische Ausrüstung von Kunststoffen im Allgemeinen kann prinzipiell auf drei Wegen erfolgen, entweder durch oberflächliche Applikation eines antistatischen Mittels, z.B. oberflächenaktive oder hygroskopische Substanzen, oder durch Einarbeiten eines antistatischen Mittels in den Kunststoff oder durch Einarbeiten von elektrisch leitenden Zuschlagststoffen in den Kunststoff, wie beispielsweise Ruß, Grafit, CNT, Metalle oder Halbleitersubstanzen.

Derzeit werden den Elastomerzusammensetzungen für Bauteile zur Anwendung im Hochleistungs- bzw. Hochspannungsbereich geringe Anteile von Ruß oder Grafit beigemengt, womit jedoch keine Absenkung des spezifischen Oberflächenwiderstandes erreicht wird, da die zur Überschreitung der Perkolationsschwelle nötigen Füllgrade nicht möglich sind. Eine Erhöhung der Einsatzmenge würde sich nachteilig auf die mechanischen Bauteileigenschaften, z. B. die Zugfestigkeit, auswirken. Ferner können Probleme bei der Dispergierung der Rußpartikel auftreten, was zu einer Inhomogenität im Material führt. Die Bauteile sind je nach Art und Menge des enthaltenen Kohlenstoffs dunkelgrau bis schwarz gefärbt.

Die Zumengung von CNT (Carbon Nano Tubes) kann den spezifischen Oberflächenwiderstand von Kunststoffkompositen zwar in den erforderlich niedrigen Bereich absenken und das schon mit etwa 10fach geringeren Einsatzmengen im Vergleich zu Ruß. Es handelt sich dabei aber um Nanopartikel, deren umweltökologische und gesundheitsrelevante Auswirkungen bei ihrer Freisetzung aus der Kunststoff- bzw. Elastomermatrix, beispielsweise durch Alterungsprozesse, derzeit nicht geklärt sind.

Eine Vielzahl von Patenten oder Patentanmeldungen ist auch mit antistatischen Ausrüstungen von Elastomeren befasst, wobei die Ausrüstung darauf beruht, dass man leitfähige Additive physikalisch in das Elastomermaterial einbringt. Beispielsweise beschreibt die EP 1 910 445 das Einbringen von Cadmium-, Indium-, Blei- und/oder Zinkoxid bzw. -hydroxid, die DE 36 33 883 und die DE 69 93 0728 das von Ruß, die DE 60037988 das von Carbon Black, die DE 10 2004 042033 das von quartären Ammoniumsulfonaten oder die DE 10 2009 044345 das von ionischen Flüssigkeiten in Verbindung mit anderen Leitfähigkeitszusätzen. So werden elektrisch leitende elastomere Massen erhalten.

Die DE 69630453.8 T2 beschreibt inhärent leitfähige Polymere für die antistatische Ausrüstung thermoplastischer Elestomere oder Elastomerblends. Diese Polymere dienen auch als EMI-Abschirmmaterial. In der DE 60306144 T2 ist eine antistatische Elastomerzusammensetzung beschrieben, die zur Verbesserung der antistatischen Eigenschaften ein Copolymer aus Polyamid und Polyetherblöcken enthält. Die DE-OS 40 15 184 beschreibt ein synergistisches Gemisch zweier Verbindungen, das als Antistatikmittel auch für Naturkautschuk geeignet sein soll. Die DE-OS 44 12 366 beschreibt Alkylamidpropylbetaine als schnell wirkende Antistatikadditive für thermoplastische Kunststoffe, vorwiegend Polyolefine, beschrieben, die keine negativen Oberflächeneffekte in Folge der Migration niedermolekularer Stoffe an die Oberfläche aufweisen.

Verschiedene Telechelic-Ionomere mit Polyisopren- oder Polybutadienstruktur sind im Stand der Technik beschrieben:
LINDSELL W E ET AL: "The preparation and characterization of phosphorus-terminated poly-1,3-butadiene: new telechelic ionomers", POLYMER, ELSEVIER SCIENCE PUBLISHERS B.V., GB, Bd. 31, Nr. 7, 1. Juli 1990 (1990-07-01), Seiten 1374-1378,
VENKATESHWARAN L N; TANT M R; WILKES G L; CHARLIER P; JEROME R: "Structure-property comparison of sulfonated and carboylated telechelic ionomers based on polyisoprene", MACROMOLECULES, Bd. 25, Nr. 15, 20. Juli 1992 (1992-07-20), Seiten 3996-4001,
SCHAEDLER VOLKER; FRANCK ACHIM; WIESNER ULRICH; SPIESS HANS W: "EPR studies on telechelic polymers: characterization of ion multiplets", MACROMOLECULES, Bd. 30, Nr. 13, 30. Juni 1997 (1997-06-30), Seiten 3832-3838,
BHARGAVA S., COOPER S.L.: "Effect on Water on Viscosity and Shear-Thickening Behavior of Telechelic Ionomers in Non polsar Solvents", MACROMOLECULES, Bd. 31, 1. Januar 1998 (1998-01-01), Seiten 508-514,
CHERLIEN PASCAL; JEROME ROBERT; TEYSSIE PHILIPPE; UTRACKI L A: "Viscoelastic properties of telechelic ionomers. 2. Quaternized [alpha],[omega]-bis(dimethylamino)polyisoprene", MACROMOLECULES, Bd. 25, Nr. 2, 20. Januar 1992 (1992-01-20), Seiten 617-624

Die EP 1 500 684 A1 beschreibt antistatische Elastomerzusammensetzungen aus Elastomeren und Blockpolymeren aus Polyether- und Polyamidblöcken. Die Blockpolymere sind in die Elastomere eingearbeitet.

Keine dieser Druckschriften gibt einen Hinweis darauf, dass die Antistatikmittel durch kovalente Bindung in die Polymermatrix permanent integriert wären, oder dass hierfür eine Notwendigkeit bestünde.

Zusammenfassend kann festgehalten werden, dass die im Stand der Technik bekannten und zur antistatischen Ausrüstung von Polymermatrizes, respektive Elastomermatrizes, verwendeten Antistatikadditive den Nachteil besitzen, den spezifischen Oberflächenwiderstand nicht unter 10¹⁰ Ω/□ absenken zu können, wie im Fall von Ruß und Grafit, die auch eine ungewünschte dunkelgraue bis schwarze Einfärbung der Elastomermatrizes und damit der daraus hergestellten Bauteile bewirken. Die bekannten Antistatikadditive auf Polymerbasis lassen eine permanente antistatische Ausrüstung eines polymeren oder elastomeren Bulkmaterials nicht zu. Eine permanente Antistatikausrüstung elastomerer Bulkmaterialien und daraus hergestellter Bauteile sind für die angegebenen Anwendungsbereiche nicht nur wünschenswert, sondern für den Explosionsschutzbereich unabdingbar.

Unter einem ersten Aspekt ist es daher Aufgabe der vorliegenden Erfindung Antistatikadditive für insbesondere Elastomere anzugeben, welche mit der Elastomermatrix kompatibel sind und damit leicht in dieser verteilbar bzw. homogenisierbar sind. Unter einem weiteren Aspekt der vorliegenden Erfindung sollen die Antistatikadditive permanent durch kovalente Anbindung in die Elastomermatrix integrierbar sein, um daraus permanent antistatisch ausgerüstete Elektrik- und Elektronikbauteile für den Hochleistungs- bzw. Hochspannungsbereich erzeugen zu könne. Diese Bauteile sollen eine erhöhte Shore D-Härte und Zugfestigkeit im Vergleich zu nicht-additivierten oder anderweitig additivierten Materialien aufweisen.

Gegenstand der vorliegenden Erfindung sind zunächst polymergebundene bzw. polymere Additive zur antistatischen Ausrüstung von Elastomeren, wobei die Additive auf ungesättigten Polyestern und/oder endgruppenfunktionalisierten Kautschuken (Elastomeren) basieren, wobei die ungesättigten Polyester und/oder endgruppenfunktionalisierten Kautschuke vorzugsweise in ionischer bzw. Elektrolytformform vorliegen und in Anspruch 1 formelmäßig definiert sind.

Die ungesättigten Polyester sind aus der Gruppe ausgewählt, die aus den Verbindungen der Formeln UP-1 bis UP-7 besteht.

Die endgruppenfunktionalisierten Kautschuke (Elastomere), respektive bevorzugt Polybutadiene, sind aus der Gruppe ausgewählt, die aus den Verbindungen der Formeln PB4, PB8 und PB7 besteht.

Die oben beschriebenen erfindungsgemäßen Antistatikadditive auf Basis ungesättigten Polyester und endgruppenfunktionalisierten Kautschuke/Polybutadiene weisen in vorteilhafter Weise eine Thermostabilität von mindestens 180°C, bevorzugt von 200°C auf. Diese Temperaturen sind für ein homogenes Einbringen der Additive in eine Polymer- bzw. Elastomermatrix vorteilhaft und erleichtern die Verarbeitung.

Diese ungesättigten Polyester und endgruppenfunktionalisierten Kautschuke/Polybutadiene haben des Weiteren den Vorteil, dass sie farbneutral sind. Sie färben das damit antistatisch auszurüstende Elastomermaterial daher nicht, so dass dieses gegebenenfalls mit anderen Farbpigmenten bzw. Färbemitteln einer gewünschten Farbe koloriert werden kann.

Bei den oben formelmäßig angegebenen ungesättigten Polyestern (UP-1 bis UP-7) und endgruppenfunktionalisierten Kautschuken/Polybutadienen (PB-4, PB-7 und PB-8) ist n oder n + m bevorzugt eine Zahl zwischen 10 und 30. Es handelt sich bei den erfindungsgemäßen polymergebundenen bzw. polymeren Additiven also in vorteilhafter Weise um sogenannte Oligomere mit Kettenlängen, die zwischen den von Polymeren und niedermolekularen Verbindungen liegen.

Gegenstand der Erfindung sind demnach auch antistatisch ausgerüstete Elastomere oder Elastomerzusammensetzungen (Elastomerblends), basierend auf einer Elastomermatrix aus wenigstens einem Elastomer und/oder wenigstens einem Kautschuk, wobei in die Elastomermatrix wenigistens ein polymergebundenes bzw. polymeres Antistatikadditiv nach wenigstens einem der Ansprüche 1 bis 9 homogen eingebracht und kovalent gebunden ist bzw. kovalent gebunden werden kann.

Durch den Zusatz dieser neuen polymergebundenen Antistatikadditive auf Basis von ungesättigten Polyestern oder elektrolytfunktionalisierten Elastomeren (Kautschuken), beispielsweise elektrolytfunktionalisierten Polybutadienen, ist es möglich den spezifischen Oberflächenwiderstand der vulkanisierten Elastomere bei Normalklima (23°C, 50% relative Luftfeuchte) deutlich von >> 10¹³ Ω/□ auf weit unter 10¹⁰ Ω/□ abzusenken, wie in den später beschriebenen Ausführungsbeispielen bewiesen wird. Die so additivierten Elastomere bzw. Elastomerzusammensetzungen sind weitgehend farblos und lassen somit die Herstellung von beliebig gefärbten Elastomerbauteilen mit antistatischer Ausrüstung zu und zwar unabhängig von der Menge an zugesetztem Additiv.

Erfindungsgemäß ist das oder sind die polymere(n) Antistatikadditiv(e) in Anteilen zwischen 0,1 und 20,0 Gew.%, bevorzugt zwischen 0,5 und 10 Gew.% und noch bevorzugter zwischen 1 und 6 Gew.% in der Gesamtrezeptur enthalten. Im Vergleich zu beispielsweise intrinsisch antistatischen Polymeren sind somit nur relativ geringe Einsatzmengen der erfindungsgemäßen Antistatikadditive zur gewünscht großen Absenkung des spezifischen Oberflächenwiderstands erforderlich. Mit derart geringen Einsatzmengen ist eine Störung der Elastomermatrix nicht zu erwarten bzw. vermeidbar.

Gemäß einer bevorzugten Ausführungsform der Erfindung können auch Mischungen aus den polymeren Antistatikadditiven auf Basis ungesättigter Polyester und auf Basis endgruppenfunktionalisierter Elastomere (Kautschuke) als Antistatikadditiv in den erfindungsgemäßen antistatisch ausgerüsteten Elastomeren bzw. Elastomerzusammensetzungen enthalten sein.

Dabei kann das Verhältnis zwischen polymeren Antistatikadditiven auf Basis ungesättigter Polyester und polymeren Antistatikadditiven auf Basis von endgruppenfunktionalisierten Elastomeren (Kautschuken) in weiten Grenzen variieren, d.h. zwischen 99:1 und 1:99. Bevorzugt wird das Verhältnis aber zwischen 95:5 und 5:95 und noch bevorzugter zwischen 80:20 und 20:80 betragen.

Mit Hilfe solcher Mischungen ist eine gute Anpassung und Abstimmung der polymeren bzw. oligomeren Antistatikadditive an die Eigenschaften der auszurüstenden Elastomere bzw. Elastomermischungen, insbesondere im Hinblick auf eine verbesserte Homogenität der Einbringung und Verteilung und letztendlich kovalenten Anbindung, möglich. Eine Permanentausrüstung über die gesamte Lebensdauer eines Bauteils wird damit gefördert.

Gegenstand der Erfindung ist auch ein Verfahren zur Herstellung von permanent antistatisch ausgerüsteten Elastomeren oder Bauteilen daraus, bei dem in einem ersten Schritt das oder die polymere(n) Antikstatikadditiv(e) gemäß den Ansprüchen 1 bis 9 in dem Elastomer oder der Elastomermischung homogen verteilt wird/werden und die Komponenten in einem zweiten Schritt durch Vulkanisation unter Ausbildung kovalenter Bindungen zwischen Elastomermatrix und polymerem Antistatikaddtiv reaktiv gekoppelt wird/werden.

Demnach kann zunächst die permanent antistatisch ausgerüstete Elastomerzusammensetzung hergestellt und gegebenenfalls vor der Weiterverarbeitung zu Bauteilen oder Bauteilkomponenten gelagert werden. Die Bauteile oder Bauteilkomponenten können aber auch simultan während der Vulkanisation ausgeformt werden.

Vorzugsweise wird das oder werden die polymere(n) Antistatikadditiv(e) zunächst mit den Matrixelastomeren homogen vorgemischt und danach in üblicher Weise weitere Rezepturbestandteile, wie Füllstoffe, Polymerisationsinhibitoren und schließlich Vulkanisationsbeschleuniger zugegeben und mit der Mischung homogenisiert.

Die homogene Verteilung der Komponenten kann durch Rühren in einem Rührbehälter, Dispergieren mit einem Zahnscheibenrührer in einem Rührbehälter oder Dispergieren nach dem Rotor-Stator-Prinzip in einem Rührbehälter bewerkstelligt werden.

Das oder die polymere(n) Antistatikadditiv(e) wird oder werden zu den Matrixelastomeren vor oder bei der Einarbeitung des Vulkanisationsbeschleunigers zugemischt und homogen verteilt.

In vorteilhafter Weise wird das oder werden die polymere(n) Antistatikadditiv(e) durch einen Knetprozess in einer plastischen Schmelze der Matrixelastomere homogen verteilt.

In ebenso vorteilhafter Weise wird das oder werden die polymere(n) Antistatikadditiv(e) durch einen Walzprozess in einer plastischen Schmelze der Matrixelastomere homogen verteilt. In diesem Fall sollten jedoch während des Walzprozesses noch keine Vulkanisationsmittel in der Rezeptur enthalten sein. Die beim Walzen auftretenden höheren Temperaturen könnten sonst den Vulkanisationsprozess vorzeitig starten.

Die Vulkanisation kann wahlweise mittels Schwefelvulkanisation, Peroxidvulkanisation oder Vulkanisation mit energiereicher Strahlung durchgeführt werden.

Die Herstellung der erfindungsgemäß antistatisch ausgerüsteten Elastomere oder Elastomermischungen lässt also einige Variationen zu. Das Einbringen der Antistatikadditive oder Antistatikadditivmischungen kann so entweder nachträglich zur bereits fertigen unvulkanisierten Elastomermischung oder bereits während des Produktionsprozesses der Elastomermischung erfolgen. Für die Antistatikadditive auf Basis der Kautschuk- bzw. Elastomerderivate wurde aufgrund der strukturellen Ähnlichkeit eine gute Verträglichkeit und damit Dispergierbarkeit mit der auszurüstenden Elastomermatrix erwartet und hat sich auch erwiesen. Der Einsatz der Antistatika auf Basis der modifizierten ungesättigten Polyester zeigte ebenfalls eine überraschend gute Verträglichkeit/Dispergierbarkeit mit der Elastomermatrix.

Durch Vulkanisation lassen sich die Doppelbindungen aufweisenden erfindungsgemäß eingesetzten Antistatika erstmals über chemisch kovalente Bindungen in ein Elastomernetzwerk (eine Elastomermatrix) einbauen. Auf diese Weise wird die angestrebte hohe Permanenz der Antistatikausrüstung über die Lebensdauer eines damit hergestellten Bauteiles erreicht. Das Additiv hat keinen oder nur einen geringen (negativen) Einfluss auf die Verarbeitungseigenschaften des Elastomers bzw. der Elastomermischung und die resultierenden mechanischen Eigenschaften der Vulkanisate, was aber gegebenenfalls durch eine Anpassung der Rezeptur überkompensiert werden könnte. Gegenstand der Erfindung ist auch die Verwendung der mit dem Verfahren gemäß den Ansprüchen 14 bis 21 hergestellten permanent antistatisch ausgerüsteten Elastomere zur Herstellung von Bauteilen für den Einsatz in der Elektrotechnik und Elektronik.

Durch den chemischen Einbau der Additive in das Elastomernetzwerk erreicht man neben der deutlichen Absenkung des spezifischen Oberflächenwiderstands auf unter 10¹⁰ Ω/□, zudem eine Verbesserung der Oberflächenhärte (Shore D) und der Zugfestigkeit im Vergleich zur unadditivierten Elastomermatrix. Auch die Glasübergangstemperatur des antistatisch ausgerüsteten Vulkanisats wird durch die Integration des Additivs bzw. der Additive nicht oder nur wenig (negativ) beeinflusst.

Nachfolgend wird die Erfindung im Wege von Ausführungsbeispielen näher erläutert und untermauert.

### I. Herstellung von polymeren Antistatikadditiven für Elastomere bzw. Elastomermischungen

Die nachfolgend wiedergegebenen Reaktionsgleichungen zeigen schematisch die Synthese der bevorzugten Antistatikadditive und sind nur allgemein, aber nicht notwendiger Weise bindend:

### Ungesättigte Polyester

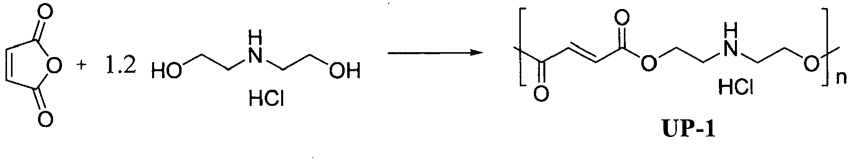

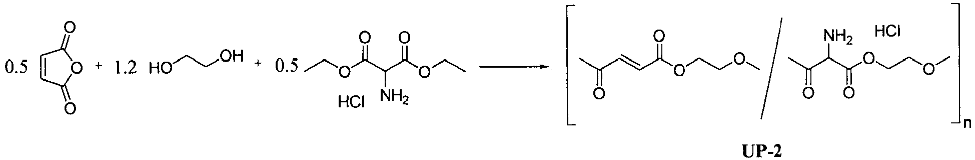

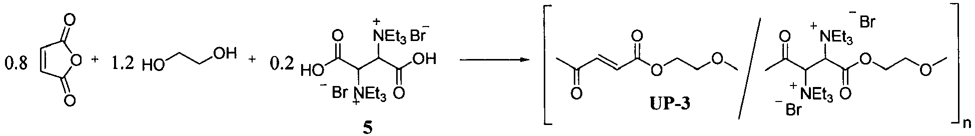

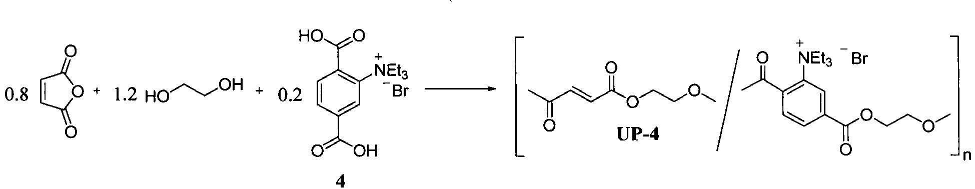

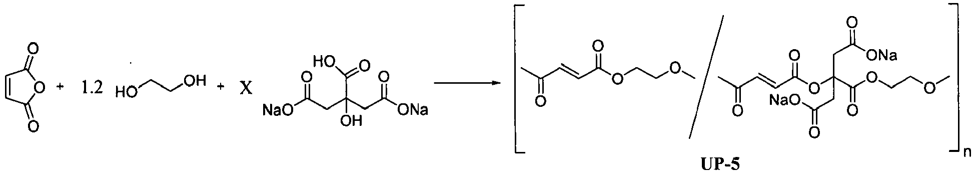

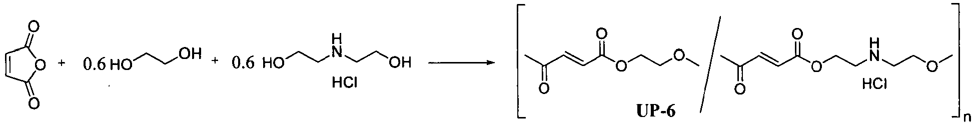

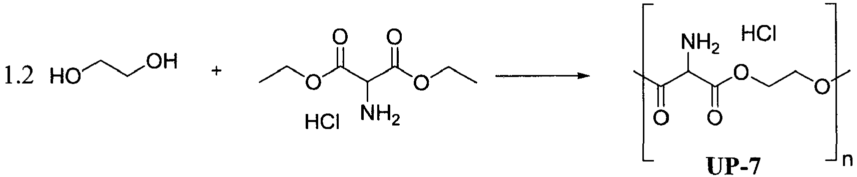

### Endgruppenfunktionalisierte Polybutadiene

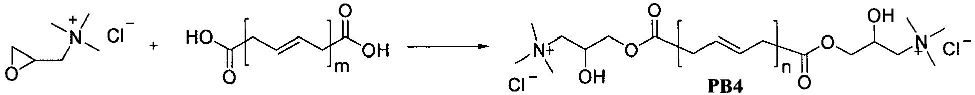

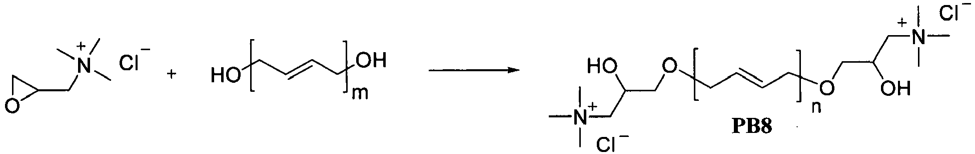

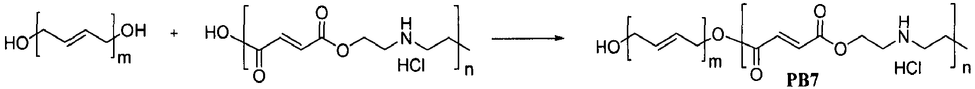

Die ungesättigten Polyester lassen sich durch die Verwendung eines Monomers mit bereits enthaltenen ionischen Funktionalitäten in bekannter Weise über Polymeraufbaureaktionen herstellen (D. Braun, H. Cherdron und W. Kern, Praktikum der makromolekularen organischen Chemie, Dr. Alfred Hüthig Verlag GmbH, Heidelberg, 1979). Es werden vor allem Additive mit reaktiven Doppelbindungen synthetisiert, die bei der Vulkanisation des Elastomers in dessen Netzwerk integriert werden und damit eine permanente antistatische Ausrüstung ermöglichen.

Die endgruppenfunktionalisierten Elastomere lassen sich in bekannter Weise durch polymeranaloge Reaktionen herstellen (A. B. Cherian, E. T. Thachil, Journal of Applied Polymer Science 2004, 94 1956).

In der Tabelle 1 unten sind die spezifischen Oberflächenwiderstände der reinen Syntheseprodukte der erfindungsgemäß bevorzugten Antistatikadditive zusammengestellt. Der spezifische Oberflächenwiderstand wurde durch Applikation auf ein nicht leitendes Substrat (spezifischer Oberflächenwiderstand > 10¹² Ω/□) von allen Verbindungen bestimmt. Alle Produkte zeigten sich als Antistatikadditive geeignet.

**Tabelle 1: Oberflächenwiderstand der bevorzugten Antistatikadditive**

| Additive | Oberflächenwiderstand [Ω/□] (Trockenklima*) | Oberflächenwiderstand [Ω/□] (Normalklima*) |
|---|---|---|
| UP1 | 1·10⁶ | 2·10⁶ |
| UP2 | 3·10⁸ | 8·10⁷ |
| UP3 | 3·10⁸ | 5·10⁷ |
| UP4 | 2·10⁹ | 3·10⁷ |
| UP5 | 1·10⁸ | 7·10⁷ |
| UP6 | 1·10⁶ | 2·10⁶ |
| UP7 | 2·10⁸ | 3·10⁵ |
| PB4 | 7·10⁹ | 2·10⁹ |
| PB7 | 5·10⁶ | 7·10⁵ |
| PB8 | 4·10⁶ | 1·10⁶ |
| Natriumoleat | 1·10⁹ | 4·10⁸ |

| | | |
|---|---|---|
| (*DIN EN ISO 3672-2: Normalklima: 23°C/50% Luftfeuchte, Trockenklima 20°C/35% Luftfeuchte) | | |

Die Messung des Oberflächenwiderstands R erfolgt nach einer Klimakonditionierung der Proben im Trockenklima (20°C/35% Luftfeuchte) und im Normalklima (23°C/50% Luftfeuchte) im Klimaschrank KBF der Firma BINDER mit dem Hochohmwiderstandsmessgerät HM 307 D der Firma FETRONIC mit einer Ringelektrode. Empfehlungen der Dauer und Art der Konditionierung wurden der Norm DIN EN ISO 3915 entnommen und auf mindestens 16 h festgelegt.

### II. Herstellung antistatisch ausgerüsteter Elastomere bzw. Elastomerbauteile

Wie bereits erwähnt können die mit Antistatikadditiven additivierten Elastomere nach der Homogenisierung direkt vulkanisiert und bis zu ihrer Weiterverarbeitung gelagert werden. Alternativ kann die Ausformung zu antistatischen Bauteilen oder Bauteilkomponenten auch gleichzeitig mit der Vulkanisation durchgeführt werden.

### Beispiel 1: Antistatische Ausrüstung von Elastomer(bauteil)en mittels ungesättigter Polyester

Das Antistatikadditiv UP-5 auf Basis eines ungesättigten Polyesters der oben dargestellten Formel wurde mittels einer Polykondensationsreaktion in Schmelze bei 170°C für 1 h unter Schutzgasatmosphäre nach einem in der Literatur bekannten Verfahren erhalten (D. Braun, H. Cherdron und W. Kern, Praktikum der makromolekularen organischen Chemie, Dr. Alfred Hüthig Verlag GmbH, Heidelberg, 1979). Bei der Polymeraufbaureaktion zu dem Elektrolyten wurde Natriumcitrat als monomerer Baustein mit ionischen Funktionalitäten verwendet.

Das erhaltene Antistatikadditiv UP-5 ist farblos und besitzt eine sehr gute Thermostabilität bis 190°C mit einem Masserückstand von 90%. Die Thermostabilität des Additivs UP-5 wird durch die chemisch kovalente Einbindung in das Elastomernetzwerk noch erhöht.

5 Gew.% des ungesättigten Polyesters UP-5, bezogen auf die Gesamtrezeptur, werden zum Matrixelastomer hinzugefügt und im Kneter (z.B. Laborkneter Haake PolyLabSystem Rheomix R600p) bei 70°C für 5 Minuten gemischt. Danach werden weitere Rezepturbestandteile (Füllstoffe, Polymerisations- oder Vulkanisationsinhibitoren) zugemischt und weitere 5 Minuten bei gleich bleibender Temperatur homogenisiert. Schließlich werden die Vulkanisationsmittel (Beschleuniger, Schwefel) zugegeben und mit der Elastomermischung 2 Minuten homogenisiert.

Die Vulkanisation erfolgt dann nach im Stand der Technik für die Vulkanisation von Elastomeren bekannte und übliche Verfahren. Das vulkanisierte Elastomermaterial wird sodann im Normalklima (23°C, 50% relative Luftfeuchtigkeit) und im Trockenklima (20°C, 35% relative Luftfeuchtigkeit) über einen Zeitraum von mindestens 16 h konditioniert. Danach wird mittels des Hochohmmessgeräts HM 307 D der Firma FETRONIC der Oberflächenwiderstand R nach DIN EN 61340-2-1 ermittelt. Der Oberflächenwiderstand des Elastomers ohne UP-5 liegt bei >> 10¹³ Ω/□. Durch den Zusatz von nur 5 Gew.% UP-5 und Einbinden in die Elastomermatrix durch Vulkanisation konnte eine Absenkung auf 10⁸ Ω/□ erreicht werden, was die antistatische Wirkung des Additivs beweist.

Derart ausgerüstete Elastomerbauteile sind damit antistatisch ableitfähig (Tabelle 2).

**Tabelle 2: Spezifische Oberflächenwiderstände eine unadditivierten Elastomer(bauteil)s und eines mit 5% UP-5 antistatisch ausgerüsteten Elastomer(bauteil)s**

| Probe | Oberflächenwiderstand [Ω/□] (Trockenklima*) | Oberflächenwiderstand [Ω/□] (Normalklima*) |
|---|---|---|
| Vulkanisiertes Elastomer(bauteil)/nicht additiviert | >> 10¹³ Ω/□ | >> 10¹³ Ω/□ |
| Vulkanisiertes Elastmer-(bauteil) m. 5 Gew.% UP-5 | 1·10⁸ | 7·10⁷ |

| | | |
|---|---|---|
| (*DIN EN ISO 3672-2: Normalklima: 23°C/50% Luftfeuchte, Trockenklima 20°C/35% Luftfeuchte) | | |

In rasterelektronenmikroskopischen Untersuchungen (REM) waren keine Entmischungsprozesse erkennbar, somit kann von einer homogenen Integration des polymeren Antistatikadditivs in das Elastomernetzwerk ausgegangen werden.

In Tabelle 3 unten sind mechanische und thermische Eigenschaften des mit dem polymeren Antistatikadditiv additivierten Elastomer(bauteil) im Vergleich zu demjenigen ohne Additivzusatz zusammengestellt.

**Tabelle 3: Eigenschaften der mit 5 Gew.% UP-5 additivierten Elastomermischung im Vergleich zur unadditivierten Elastomermischung**

| | Vulkanisiertes unadditiviertes Elastomer(bauteil) | Vulkanisiertes mit 5 Gew.% UP-5 additiviertes Elastomer(bauteil) |
|---|---|---|
| Härte nach Shore D | 48,4 | 48,9 |
| Zugfestigkeit bei 100% Dehnung | 6.65 | 6.95 |
| Glasübergangstemperatur | 73,5°C | 72,1°C |

Durch die chemisch kovalente Anbindung des Additivs in das Elastomernetzwerk wird eine Verbesserung der Oberflächenhärte (Shore D) und der Zugfestigkeit für das mit polymerem Antistatikadditiv ausgerüsteten Elastomer(bauteil) im Vergleich zur nicht additivierten Probe erreicht. Der Glasübergang des antistatisch ausgerüsteten Vulkanisats wird durch die Integration des Additivs nicht negativ beeinflusst.

### Beispiel 2: Antistatische Ausrüstung von Elastomer(bauteil)en mittels endgruppenfunktionalisierten Antistatikadditiven

Das Antistatikadditiv PB7 wurde entsprechend der Literatur durch Umsetzung der Carboxylfunktionen eines UP-Harzes mit einem mit Hydroxylgruppen funktionalisierten Polybutadien in Schmelze erhalten (A. B. Cherian, E. T. Thachil, Journal of Applied Polymer Science 2004, 94 1956). Die Darstellung erfolgte unter Argonatmosphäre bei 160°C während 1 h. Das erhaltene Antistatikadditiv ist farblos und besitzt eine sehr gute Thermostabilität bis 190°C mit einem Masserückstand von 89%.

5 Gew.% PB7 wurden einer Elastomermischung ohne Vulkanisationskomponenten (Beschleuniger, Schwefel) im Kneter (z.B. Laborkneter Haake PolyLabSystem Rheomix R600p) bei 70°C für 10 Minuten zugemischt. Dann werden die Vulkanisationskomponenten zugegeben und nochmals 2 Minuten bei konstanter Temperatur mit der Elastomermatrix homogenisiert. Die Vulkanisation erfolgt nach dem für Elastomere im Stand der Technik bekannten und üblichen Verfahren. Das vulkanisierte Elastomer wird im Normalklima (23°C/50% Luftfeuchte) und im Trockenklima (20°C/35% Luftfeuchte) über einen Zeitraum von mindestens 16 h konditioniert. Danach wird mittels des Hochohmmessgeräts HM 307 D der Firma FETRONIC der Oberflächenwiderstand R nach DIN EN 61340-2-1 ermittelt. Der Oberflächenwiderstand des Elastomers ohne PB7 liegt bei >> 10¹³ Ω/□. Durch den Zusatz von nur 5 Gew.% PB7 und Einbinden in die Elastomermatrix durch Vulkanisation konnte eine Absenkung auf 10⁶ Ω/□ erreicht werden, was die antistatische Wirkung des Additivs beweist.

Derart ausgerüstete Elastomerbauteile sind damit antistatisch ableitfähig (Tabelle 4).

**Tabelle 4: Spezifische Oberflächenwiderstände eines unadditivierten Elastomer(bauteil)s und eines mit 5 Gew.% PB7 antistatisch ausgerüsteten Elastomer(bauteil)s**

| Probe | Oberflächenwiderstand [Ω/□] (Trockenklima*) | Oberflächenwiderstand [Ω/□] (Normalklima*) |
|---|---|---|
| Vulkanisiertes Elastomer(bauteil)/nicht additiviert | >> 10¹³ | >> 10¹³ |
| Vulkanisiertes Elastmer-(bauteil) m. 5 Gew.% PB7 | 5·10⁶ | 7·10⁵ |

| | | |
|---|---|---|
| (*DIN EN ISO 3672-2: Normalklima: 23°C/50% Luftfeuchte, Trockenklima 20°C/35% Luftfeuchte) | | |

In Tabelle 5 unten sind mechanische und thermische Eigenschaften der mit dem polymeren Antistatikadditiv additivierten Elastomer(bauteil) im Vergleich zu demjenigen ohne Additivzusatz zusammengestellt.

**Tabelle 5: Eigenschaften der mit 5 Gew.% PB7 additivierten Elastomermischung im Vergleich zur unadditivierten Elastomermischung**

| | Vulkanisiertes unadditiviertes Elastomer(bauteil) | Vulkanisiertes mit 5 Gew.% UP-5 additiviertes Elastomer(bauteil) |
|---|---|---|
| Härte nach Shore D | 48,4 | 48,6 |
| Zugfestigkeit bei 100% Dehnung | 6.65 MPa | 6.81 MPa |
| Glasübergangstemperatur | 73,5°C | 71,5°C |

Durch die chemisch kovalente Anbindung des Additivs in das Elastomernetzwerk wird wieder eine Verbesserung der Oberflächenhärte (Shore D) und der Zugfestigkeit für das mit polymerem Antistatikadditiv ausgerüstete Elastomer(bauteil) im Vergleich zur nicht additivierten Probe erreicht. Der Glasübergang des antistatisch ausgerüsteten Vulkanisats wird durch die Integration des Additivs ebenfalls nicht negativ beeinflusst.

Die polymeren Antistatikadditive der vorliegenden Erfindung lassen sich im Vulkanisationsprozess über chemisch kovalente Bindungen in das Elastomernetzwerk (Bulkphase) integrieren. Daraus resultiert eine hohe Permanenz der Wirksamkeit, d. h. der antistatischen Eigenschaft derart ausgerüsteter Elastomere. Gleichzeitig erhält man eine Verbesserung der anwendungsrelevanten Eigenschaften Oberflächenhärte und Zugfestigkeit, unter Beibehaltung der Glasübergangstemperatur des entsprechenden unadditivierten Vulkanisats. Die Wirksamkeit der Antistatikadditive ist nicht von der Umgebungsfeuchte abhängig oder eine solche Abhängigkeit ist weitgehend reduziert. Die polymeren Antistatikadditive sind matrixkompatibel und daher einfach und homogen in die Elastomermatrix integrierbar. Die Antistatikadditive sind farbneutral, sodass beliebig farbige Elastomere oder Elastomerbauteile ohne Einschränkung herstellbar sind. Die polymergebundenen Antistatikadditive lassen sich über einfache Synthesen in Substanz darstellen und können ohne weitere Aufarbeitungsschritte eingesetzt werden. Die Antistatikadditive sind bis 190°C thermostabil und damit problemlos bei ihrer weiteren Verarbeitung handhabbar. Damit einer Elastomermatrix antistatische Eigenschaften im gewünschten Sinn verliehen werden (spezifischer Oberflächenwiderstand deutlich unter 10¹⁰ Ω/□), sind nur relativ geringe Einsatzmengen der Antistatikadditive erforderlich. Durch die Möglichkeit einer permanenten antistatischen Ausrüstung der Elastomere und daraus hergestellter Bauteile sind letztere für den Einsatz im Bereich des Explosionsschutzes vorteilhaft.

## Patentansprüche

1. Polymergebundene Additive zur antistatischen Ausrüstung von Elastomeren, wobei die Additive auf ungesättigten Polyestern und/oder endgruppenfunktionalisierten Kautschuken basieren, wobei die ungesättigten Polyester in Elektrolytform vorliegen und aus der Gruppe, bestehend aus 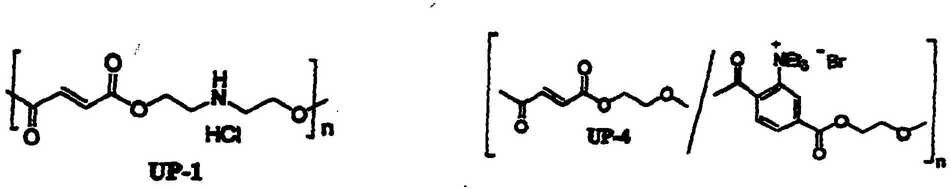 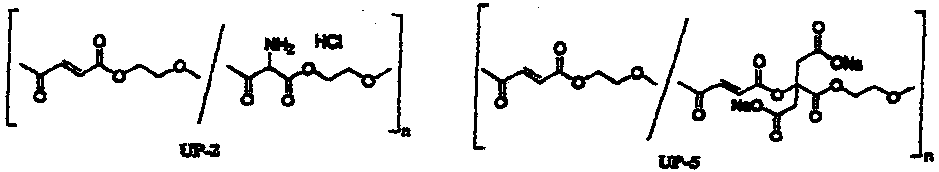 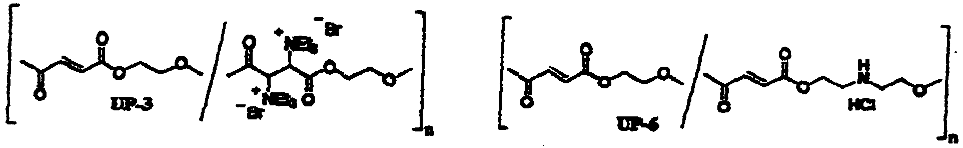 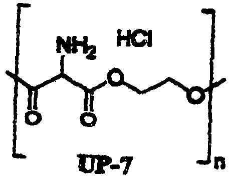 ausgewählt sind und die endgruppenfunktionalisierten Kautschuke Polybutadiene sind, die in ionischer bzw. Elektrolytform vorliegen und aus der Gruppe bestehend aus 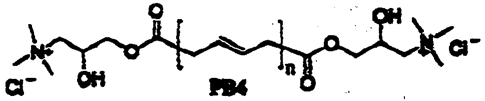 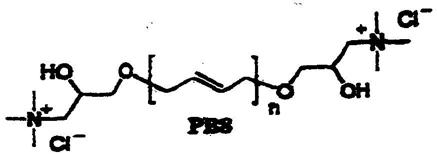 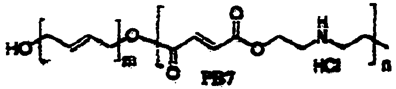 ausgewählt sind.

2. Additive nach Anspruch 1, **dadurch gekennzeichnet, dass** die ungesättigten Polyester und endgruppenfunktionalisierten Kautschuke/Polybutadiene eine Thermostabilität von mindestens 180°C, bevorzugt von 200°C aufweisen.

3. Additive nach Anspruch 1 oder 2, **dadurch gekennzeichnet, dass** die ungesättigten Polyester und endgruppenfunktionalisierten Kautschuke/Polybutadiene farbneutral sind.

4. Additive nach einem jeden der Ansprüche 1 bis 3, **dadurch gekennzeichnet, dass** in den Verbindungen der Ansprüche 1 und 4 n oder n + m eine Zahl zwischen 10 und 30 bedeutet.

5. Antistatisch ausgerüstete Elastomere oder Elastomerzusammensetzungen, basierend auf einer Elastomermatrix aus wenigstens einem Elastomer und/oder wenigstens einem Kautschuk, wobei in die Elastomermatrix wenigstens ein polymerbasierendes Antistatikadditiv nach wenigstens einem der Ansprüche 1 bis 4 homogen eingebracht und kovalent gebunden ist.

6. Antistatisch ausgerüstete Elastomere oder Elastomerzusammensetzungen nach Anspruch 5, **dadurch gekennzeichnet, dass** das oder die polymere(n) Antistaktikadditiv(e) in Anteilen zwischen 0,1 und 20,0 Gew.%, bevorzugt zwischen 0,5 und 10 Gew.% und noch bevorzugter zwischen 1 und 6 Gew.% in der Gesamtrezeptur enthalten sind.

7. Antistatisch ausgerüstete Elastomere oder Elastomerzusammensetzungen nach Anspruch 6, **dadurch gekennzeichnet, dass** Mischungen aus den polymeren Antistatikadditiven auf Basis ungesättigter Polyester und auf Basis endgruppenfunktionalisierter Kautschuke enthalten sind.

8. Antistatisch ausgerüstete Elastomere oder Elastomerzusammensetzungen nach Anspruch 7, **dadurch gekennzeichnet, dass** das Verhältnis zwischen polymeren Antistatikadditiven auf Basis ungesättigter Polyester und polymeren Antistatikadditiven auf Basis von endgruppenfunktionalisierten Kautschuken zwischen 99:1 und 1:99, bevorzugt zwischen 95:5 und 5:95 und noch bevorzugter zwischen 80:20 und 20:80 beträgt.

9. Verfahren zur Herstellung von permanent antistatisch ausgerüsteten Elastomeren oder Bauteilen daraus, bei dem in einem ersten Schritt das oder die polymere(n) Antikstatikadditiv(e) gemäß den Ansprüchen 1 bis 4 in dem Elastomer oder der Elastomermischung homogen verteilt wird/werden und die Komponenten in einem zweiten Schritt durch Vulkanisation unter Ausbildung kovalenter Bindungen zwischen Elastomermatrix und polymerem Antistatikaddtiv reaktiv gekoppelt wird/werden.

10. Verfahren nach Anspruch 9, **dadurch gekennzeichnet, dass** das Bauteil simultan mit der Vulkanisation ausgeformt wird.

11. Verfahren nach Anspruch 9 oder 10, **dadurch gekennzeichnet, dass** das oder die polymeren Antistatikadditive zunächst mit den Matrixelastomeren homogen vorgemischt werden und danach in üblicher Weise weitere Rezepturbestandteile, wie Füllstoffe, Polymerisationsinhibitoren und schließlich Vulkanisationsbeschleuniger zugegeben und mit der Mischung homogenisiert werden.

12. Verfahren nach den Ansprüchen 9 bis 11, **dadurch gekennzeichnet, dass** die homogene Verteilung der Komponenten durch Rühren in einem Rührbehälter, Dispergieren mit einem Zahnscheibenrührer in einem Rührbehälter oder Dispergieren nach dem Rotor-Stator-Prinzip in einem Rührbehälter durchgeführt wird.

13. Verfahren nach Anspruch 9 oder 10, **dadurch gekennzeichnet, dass** das oder die polymere(n) Antistatikadditiv(e) zu den Matrixelastomeren vor oder bei der Einarbeitung des Vulkanisationsbeschleunigers zugemischt und homogen verteilt wird/werden.

14. Verfahren nach Anspruch 13, **dadurch gekennzeichnet, dass** das oder die polymere(n) Antistatikadditiv(e) durch einen Knetprozess in einer plastischen Schmelze der Matrixelastomere homogen verteilt wird/werden.

15. Verfahren nach Anspruch 13, **dadurch gekennzeichnet, dass** das oder die polymere(n) Antistatikadditiv(e) durch einen Walzprozess in einer plastischen Schmelze der Matrixelastomere homogen verteilt wird/werden.

16. Verfahren nach einem jeden der Ansprüche 9 bis 15, da-durch gekennzeichnet, dass die Vulkanisation mittels Schwefelvulkanisation, Peroxidvulkanisation oder Vulkanisation mit energiereicher Strahlung durchgeführt wird.

17. Verwendung der mit dem Verfahren gemäß den Ansprüchen 9 bis 16 hergestellten permanent antistatisch ausgerüsteten Elastomere zur Herstellung von Bauteilen für den Einsatz in der Elektrotechnik und Elektronik sowohl im Niederspannungsbereich, als auch im Hochleistungs- bzw. Hochspannungsbereich und im Bereich des Explosionsschutzes für Industrieanlagen.

## Claims

1. Polymer-bound additives for the antistatic finishing of elastomers, where the additives are based on unsaturated polyesters and/or end-group functionalised rubbers, where the unsaturated polyesters are present in electrolyte form and are selected from the group, composed of 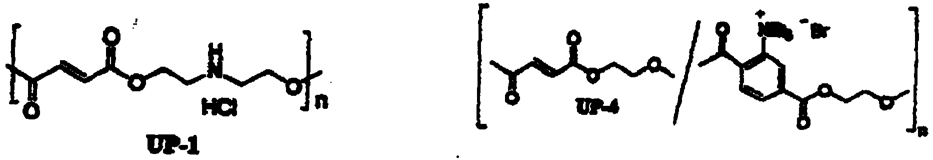 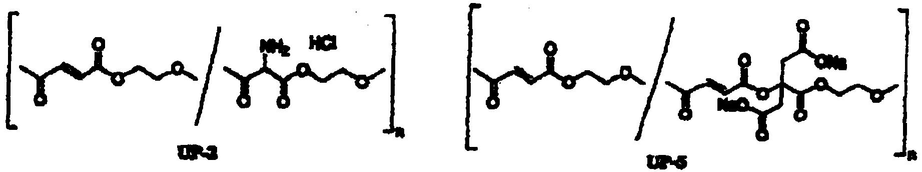 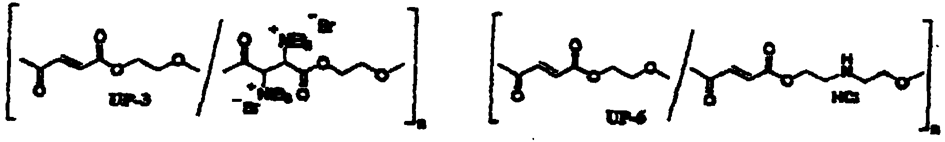 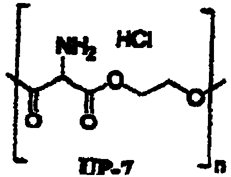 and the end-group functionalised rubbers are polybutadienes, which are present in ionic or electrolyte form, respectively, and are selected from the group composed of

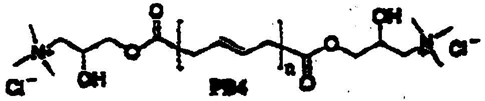

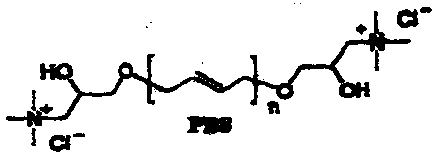

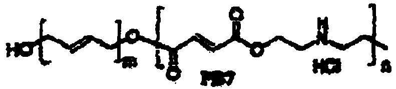

2. Additives according to claim 1, **characterised in that** the unsaturated polyesters and end-group functionalised rubbers/polybutadienes have a thermostability of at least 180 °C, preferably 200 °C.

3. Additives according to claim 1 or 2, **characterised in that** the unsaturated polyesters and end-group functionalised rubbers/polybutadienes are colour-neutral.

4. Additives according to anyone of the claims 1 to 3, **characterised in that** n or n + m in connections of the claims 1 and 4 means a number between 10 and 30.

5. Antistatically finished elastomers or elastomer formulations, based on an elastomer matrix made of at least one elastomer and/or at least one rubber, where at least one polymer-based antistatic additive has been integrated homogeneously in the elastomer matrix according to at least one of the claims 1 to 4 and covalently bounded.

6. Antistatically finished elastomers or elastomer formulations according to claim 5, **characterised in that** the polymer antistatic additive(s) has/have been added in the overall formula in the ratio between 0.1 and 20.0 percent by weight, preferably between 0.5 and 10 percent by weight and even more preferred between 1 and 6 percent by weight.

7. Antistatically finished elastomers or elastomer formulations according to claim 6, **characterised in that** mixtures from the polymer antistatic additives on the basis of unsaturated polyesters and on the basis of end-group functionalised rubbers are included.

8. Antistatically finished elastomers or elastomer formulations according to claim 7, **characterised in that** the ratio between polymer antistatic additives on the basis of unsaturated polyesters and polymer antistatic additives on the basis of end-group functionalised rubbers is 99:1 and 1:99, preferably between 95:5 and 5:95 and even more preferred between 80:20 and 20:80.

9. Method for manufacturing permanently antistatically finished elastomers or components from it, whereby in a first step the polymer antistatic additive(s) according to claims 1 to 4 is/are homogeneously distributed in the elastomer or the elastomer mixture and the components in a second step are reactively coupled by vulcanisation through building of covalent bonds between the elastomer matrix and polymer antistatic additive.

10. Method according to claim 9, **characterised in that** the component is simultaneously formed with the vulcanisation.

11. Method according to claim 9 or 10, **characterised in that** the polymer antistatic additive(s) is/are first homogeneously pre-mixed with the matrix elastomers and then other formula components, such as fillers, polymerisation inhibitors and finally vulcanisation accelerators, are added in the usual manner and homogenised with the mixture.

12. Method according to claims 9 to 11, **characterised in that** the homogeneous distribution of the components is performed using a stirrer in a stirring container, dispersing with a toothed disc mixer in a stirring container or dispersing in accordance with the rotor-stator principle in a stirring container.

13. Method according to claim 9 or 10, **characterised in that** the polymer antistatic additive(s) is/are mixed to the matrix elastomers before or during addition of the vulcanisation accelerator and homogeneously distributed.

14. Method according to claim 13, **characterised in that** the polymer antistatic additive(s) is/are homogeneously distributed through a kneading process in a plastic molten bath of the matrix elastomers.

15. Method according to claim 13, **characterised in that** the polymer antistatic additive(s) is/are homogeneously distributed through a rolling process in a plastic molten bath of the matrix elastomers.

16. Method according to anyone of the claims 9 to 15, **characterised in that** the vulcanisation is performed using sulphur vulcanisation, peroxide vulcanisation or vulcanisation with energy-rich radiation.

17. Use of the permanently antistatically finished elastomers manufactured with the method according to claims 9 to 16 for manufacturing components for use in electrical and electronic technology both in the low-voltage range and in high-performance or high-voltage range, respectively, and in the field of explosion protection for industrial plants.

## Revendications

1. Additifs liés aux polymères pour l'apprêtage antistatique d'élastomères, les additifs étant à base de polyesters insaturés et/ou de caoutchoucs fonctionnalisés par des groupes terminaux, les polyesters insaturés étant présents sous forme électrolytique et étant sélectionnés dans le groupe constitué par 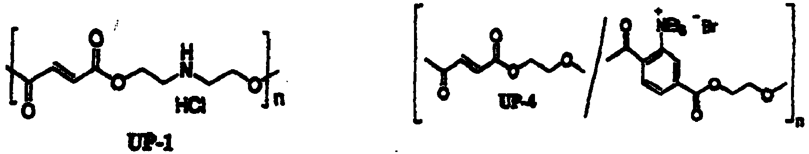 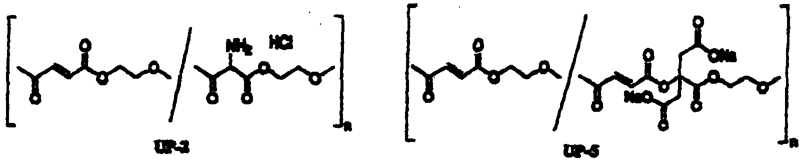 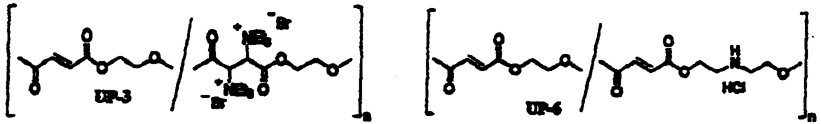 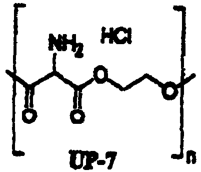 et les caoutchoucs fonctionnalisés par des groupes terminaux étant des polybutadiènes, qui sont présents sous forme ionique ou électrolytique et sont sélectionnés dans le groupe constitué par

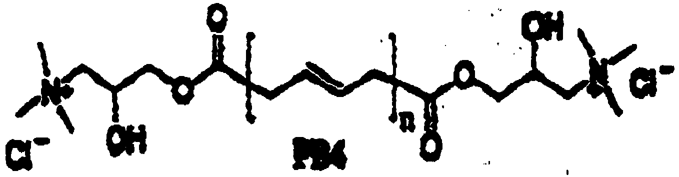

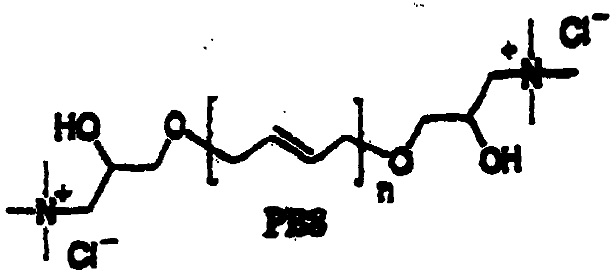

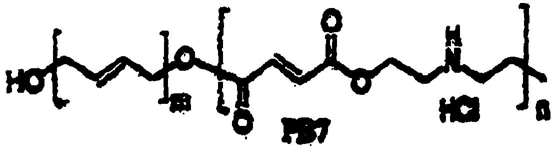

2. Additifs selon la revendication 1, **caractérisés en ce que** les polyesters insaturés et les caoutchoucs/polybutadiènes fonctionnalisés par des groupes terminaux présentent une thermostabilité d'au moins 180°C, de préférence de 200°C.

3. Additifs selon la revendication 1 ou 2, **caractérisés en ce que** les polyesters insaturés et les caoutchoucs/polybutadiènes fonctionnalisés par des groupes terminaux sont de couleur neutre.

4. Additifs selon chacune des revendications 1 à 3, **caractérisés en ce que**, dans les composés des revendications 1 et 4, n ou n + m indique un nombre compris entre 10 et 30.

5. Elastomères ou compositions élastomères ayant été soumis à un apprêtage antistatique, à base d'une matrice élastomère composée d'au moins un élastomère et/ou d'au moins un caoutchouc, au moins un additif antistatique à base de polymère selon au moins l'une des revendications 1 à 4 étant introduit de manière homogène et lié de manière covalente dans la matrice élastomère.

6. Elastomères ou compositions élastomères ayant été soumis à un apprêtage antistatique selon la revendication 5, caractérisé(e)s en ce que le ou les additifs antistatiques polymères sont contenus en proportions comprises entre 0,1 et 20,0 % en poids, de préférence entre 0,5 et 10 % en poids et mieux encore entre 1 et 6 % en poids dans la formulation totale.

7. Elastomères ou compositions élastomères ayant été soumis à un apprêtage antistatique selon la revendication 6, caractérisé(e)s en ce que des mélanges composés des additifs antistatiques polymères à base de polyester insaturés et à base de caoutchoucs fonctionnalisés par des groupes terminaux sont contenus.

8. Elastomères ou compositions élastomères ayant été soumis à un apprêtage antistatique selon la revendication 7, caractérisé(e)s en ce que le rapport entre les additifs antistatiques polymères à base de polyester insaturés et les additifs antistatiques polymères à base de caoutchoucs fonctionnalisés par des groupes terminaux est compris entre 99:1 et 1:99, de préférence entre 95:5 et 5:95 et mieux encore entre 80:20 et 20:80.

9. Procédé de fabrication d'élastomères ayant été soumis à un apprêtage antistatique permanent ou de composants de ceux-ci, selon lequel, au cours d'une première étape, le ou les additifs antistatiques polymères selon les revendications 1 à 4 sont répartis dans l'élastomère ou le mélange d'élastomères et les composants sont couplés de manière réactive au cours d'une deuxième étape par vulcanisation, ce qui entraîne la formation de liaisons covalentes entre la matrice élastomère et l'additif antistatique polymère.

10. Procédé selon la revendication 9, **caractérisé en ce que** le composant est formé simultanément à la vulcanisation.

11. Procédé selon la revendication 9 ou 10, **caractérisé en ce que** le ou les additifs antistatiques polymères sont tout d'abord préalablement mélangés de manière homogène aux élastomères de la matrice puis, de manière habituelle, d'autres constituants de la formulation, tels que des charges, des inhibiteurs de polymérisation et enfin des accélérateurs de vulcanisation sont ajoutés et homogénéisés avec le mélange.

12. Procédé selon l'une quelconque des revendications 9 à 11, **caractérisé en ce que** la répartition homogène des composants est réalisée par agitation dans un récipient agitateur, par dispersion au moyen d'un agitateur à disque denté dans un récipient agitateur ou par dispersion selon le principe du rotor et du stator dans un récipient agitateur.

13. Procédé selon la revendication 9 ou 10, **caractérisé en ce que** le ou les additifs antistatiques polymères sont mélangés aux élastomères de la matrice avant ou pendant l'incorporation de l'accélérateur de vulcanisation et répartis de manière homogène.

14. Procédé selon la revendication 13, **caractérisé en ce que** le ou les additifs antistatiques polymères sont répartis de manière homogène dans une masse fondue plastique des élastomères de la matrice par un processus de pétrissage.

15. Procédé selon la revendication 13, **caractérisé en ce que** le ou les additifs antistatiques polymères sont répartis de manière homogène dans une masse fondue plastique des élastomères de la matrice par un processus de laminage.

16. Procédé selon l'une quelconque des revendications 9 à 15, **caractérisé en ce que** la vulcanisation est réalisée au moyen d'une vulcanisation au soufre, d'une vulcanisation au peroxyde ou d'une vulcanisation à rayonnement riche en énergie.

17. Utilisation des élastomères ayant été soumis à un apprêtage antistatique permanent obtenus selon les revendications 9 à 16 pour la production de composants destinés à être utilisés dans l'électrotechnique et l'électronique aussi bien dans le domaine de la basse tension que dans le domaine de la haute tension ou de la haute performance et dans le domaine de la protection contre les explosions pour les installations industrielles.
